# EUROPÄISCHE PATENTSCHRIFT

(11) **EP 2 001 270 B1**
(45) Veröffentlichungstag und Bekanntmachung des Hinweises auf die Patenterteilung: **04.03.2020**
(21) Anmeldenummer: 08009436.0
(22) Anmeldetag: 23.05.2008
(51) Int. Cl.: H05B 37/02, H05B 39/04

(54) **Mehrkanal-Einbaudimmer**
Multichannel built-in dimmer
Variateur intégré multicanals

(30) Priorität: 08.06.2007 DE 102007026609
(43) Veröffentlichungstag der Anmeldung: 10.12.2008
(73) Patentinhaber: ABB Schweiz AG, 5400 Baden (CH)
(72) Erfinder: Ulbrich, Stefan, Dipl.-Ing., 58579 Schalksmühle (DE); Bankstahl, Johannes, Dipl.-Ing., 58739 Wickede/Ruhr (DE)

(56) Entgegenhaltungen:
- EP-A2- 0 889 673
- EP-A2- 0 901 313
- WO-A1-95/13498
- DE-A1- 10 247 333
- DE-B3-102005 004 884

## Beschreibung

Die Erfindung bezieht sich auf einen Mehrkanal-Einbaudimmer gemäß dem Oberbegriff des Anspruchs 1. Der Mehrkanal-Einbaudimmer ist insbesondere zum Einbau in einen zentralen Verteilerschrank geeignet.

Aus der DE 102 47 333 A1 ist ein Mehrkanaldimmer bekannt, also ein elektronischer Dimmer, der mehrere Leistungsstufen (Kanäle, Ausgänge) aufweist. Die Leistungsstufen sind für eine optionale lastseitige Parallelschaltung von mindestens zwei der Leistungsstufen eingerichtet. Der Mehrkanaldimmer ist flexibel einsetzbar, so dass er sowohl zur Einzelsteuerung oder Gruppensteuerung einer größeren Anzahl von Verbrauchern kleiner Leistung geeignet ist, als auch zur Steuerung eines einzelnen Verbrauchers oder weniger Verbraucher mit hoher Leistung.

Aus der EP0889673 A2 ist ein gegen einen Serienschalter austauschbarer Doppeldimmer für den Einsatz in einer Unterputzdose bekannt, welcher zwei Treiber- und Endstufen als Dimmer enthält und zu deren Steuerung ein einen gemeinsamen Mikrocontroller vorgesehen ist.

Aus der DE 10 2005 004 884 B3 ist ein Einbaudimmer bekannt, dessen Dimmer-Lastteil auf seiner Oberseite einen Steckverbinder aufweist, welcher mit einem korrespondierenden Steckverbinder eines Bedienelements elektrisch in Kontakt tritt, wobei ein- und dasselbe Dimmer-Lastteil wahlweise mit verschiedenen Bedienelementen bestückbar ist, wie z. B.
- Bedienelement für Drehbedienung,
- Bedienelement für Tastbedienung,
- Bedienelement für Zeitsteuerung,
- Bedienelement für Funksteuerung.

Der Erfindung liegt die Aufgabe zugrunde, einen universell bedienbaren und einsetzbaren Mehrkanal-Einbaudimmer anzugeben,

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass unterschiedliche Lastarten getrennt voneinander oder parallel geschaltet über einen einzigen Mehrkanal-Einbaudimmer angesteuert werden können. Der Mehrkanal-Einbaudimmer gestattet unterschiedliche zentrale Bedienarten, d. h. eine zentrale tast-, dreh- oder zeitabhängige Steuerung, so dass ein breites Anwendungsspektrum abgedeckt wird. Dadurch vereinfachen sich Produktion, Lagerhaltung, Vertrieb und Anwendung des Dimmers. Einen besonderen Vorteil stellt es dar, dass auch bei einem Mehrkanal-Einbaudimmer eine Zeitsteuerung ermöglicht wird, d. h. es ist eine Mehrkanal-Dimmer-Zeitschaltuhr realisierbar. Der Mehrkanal-Einbaudimmer ermöglicht zusätzlich zur Bedienung über mindestens ein zentrales Bedienelement (zentrale Bedienung) als weitere Bedienart eine Vorortbedienung über ein dezentrales Vorort-Bedienelement (dezentrale Bedienung, Nebenstelle). Eine nachträgliche einfache Anpassung an geänderte Kundenwünsche ist ohne Gerätewechsel möglich, d. h. der installierte Mehrkanal-Einbaudimmer wird lediglich extern neu beschaltet und gegebenenfalls über seine zentralen Bedienelemente und/oder eine Eingabeeinheit neu programmiert.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: ein schematisches Schaltschema eines Mehrkanal-Einbaudimmers,
- Fig. 2, 3, 4: Mehrkanal-Einbaudimmer bei unterschiedlichen Anwendungen.

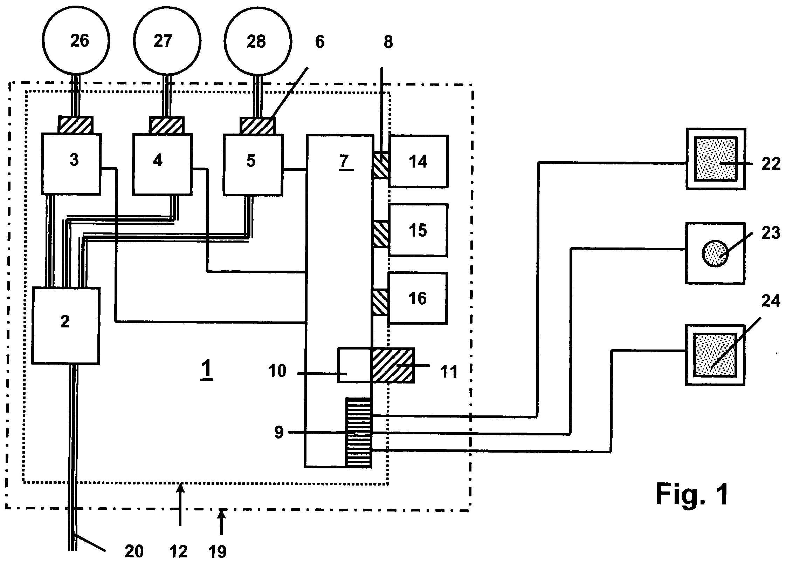

In Fig. 1 ist das Schaltschema eines Mehrkanal-Einbaudimmers, hier Dreikanal-Einbaudimmers schematisch dargestellt. Der Mehrkanal-Einbaudimmer 1 ist in einem Verteilerschrank 19 montiert und weist innerhalb seines Gerätegehäuses 12 folgende Baukomponenten auf:
- eine Eingangsstufe 2 mit einem Anschluss für ein speisendes Versorgungsnetz 20,
- mehrere, hier z. B. drei Leistungsstufen 3, 4, 5 (Kanäle, Ausgänge), welche leistungsmäßig mit der Eingangsstufe 2 verbunden sind und jeweils eine Last-Anschlusseinheit 6 (z. B. Schraubanschluss) für den Anschluss von Lasten 26, 27, 28, insbesondere Beleuchtungseinrichtungen, aufweisen,
- eine Verarbeitungs- und Steuereinrichtung 7, welche die Leistungsstufen 3, 4, 5 ausgangsseitig ansteuert und mehrere Bedien-Schnittstellen 8 - vorzugsweise Steckverbinder - für die Bestückung mit zentralen Bedienelementen 14, 15, 16 aufweist, wobei die zentralen Bedienelemente wahlweise als Dreh-Bedienelement, als Tast-Bedienelement oder als Timer-Bedienelement ausgebildet sein können, d. h. bei Einsatz mehrerer Timer-Bedienelemente ist z. B. eine Mehrkanaldimmer-Zeitschaltuhr mit getrennter Zeitsteuerung der einzelnen Kanäle realisierbar,
- eine Bedienelement-Anschlusseinheit 9 der Verarbeitungs- und Steuereinrichtung 7 für den Anschluss (z. B. Schraubanschluss) mehrerer (dezentraler) Vorort-Bedienelemente 22, 23, 24, welche z. B. als manuell betätigbare Dreh-Bedienelemente ("Nebenstelle Drehdimmer") oder Tast-Bedienelemente ("Nebenstelle Taster") ausgebildet sind und in unterschiedlichen Räumen eines Gebäudes installiert sein können,
- eine Eingabeeinheit 10 der Verarbeitungs- und Steuereinrichtung 7, welche über ein manuell betätigbares Eingabeelement 11 (z. B. Tasten oder Touchscreen) beaufschlagbar ist.

Ein Timer-Bedienelement ermöglicht eine Programmierung, d. h. individuelle Einstellungen hinsichtlich Schaltzeiten (Einschalten der Last / Ausschalten der Last) und Heiligkeit der Last während einer bestimmten Schaltzeit. Es sind mehrere Schaltzeiten pro Tag einstellbar.

Um das breite Anwendungsspektrum des Mehrkanal-Einbaudimmers zu skizzieren, sollen nachfolgend vier unterschiedliche Anwendungsbeispiele betrachtet werden:
Beim Ausführungsbeispiel nach Fig. 1 sind drei getrennt ansteuerbare Lasten 26, 27, 28 am Mehrkanal-Einbaudimmer 1 angeschlossen. Zentrales Bedienelement 14 und Vorort-Bedienelement 22 dienen zur Ansteuerung der Leistungsstufe 3 und damit der Last 26, zentrales Bedienelement 15 und Vorort-Bedienelement 23 dienen zur Ansteuerung der Leistungsstufe 4 und damit der Last 27 und zentrales Bedienelement 16 und Vorort-Bedienelement 24 dienen zur Ansteuerung der Leistungsstufe 5 und damit der Last 28. Beispielsweise sind alle drei zentralen Bedienelemente 4, 15, 16 in Form von Timer-Bedienelementen ausgebildet, wodurch sich eine je Kanal individuell programmierbare Mehrkanal-Dimmer-Zeitschaltuhr ergibt.

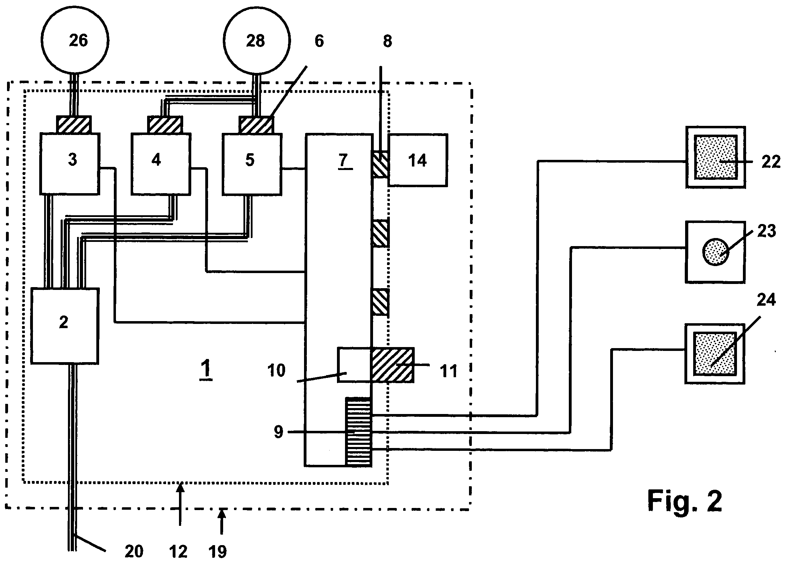

Beim Ausführungsbeispiel nach Fig. 2 sind zwei getrennt ansteuerbare Lasten 26, 28 am Mehrkanal-Einbaudimmer 1 angeschlossen, wobei die Last 28 mit beiden (parallel geschalteten) Leistungsstufen 4 und 5 verbunden ist. Last 26 ist an Leistungsstufe 3 angeschlossen. Das zentrale Bedienelement 14 dient zur Ansteuerung sowohl der Last 26 (mittels Ansteuerung der Leistungsstufe 3) als auch der Last 28 (mittels Ansteuerung der Leistungsstufen 4 und 5). Das Vorort-Bedienelement 22 dient zur Ansteuerung der Last 26. Sowohl das Vorort-Bedienelement 23 als auch das Vorort-Bedienelement 24 dienen zur Ansteuerung der Last 28 (z. B. von verschiedenen Räumens eines Gebäudes aus). Lastseitig parallel geschaltete Leistungsstufen werden auch ansteuerungsseitig parallel geschaltet.

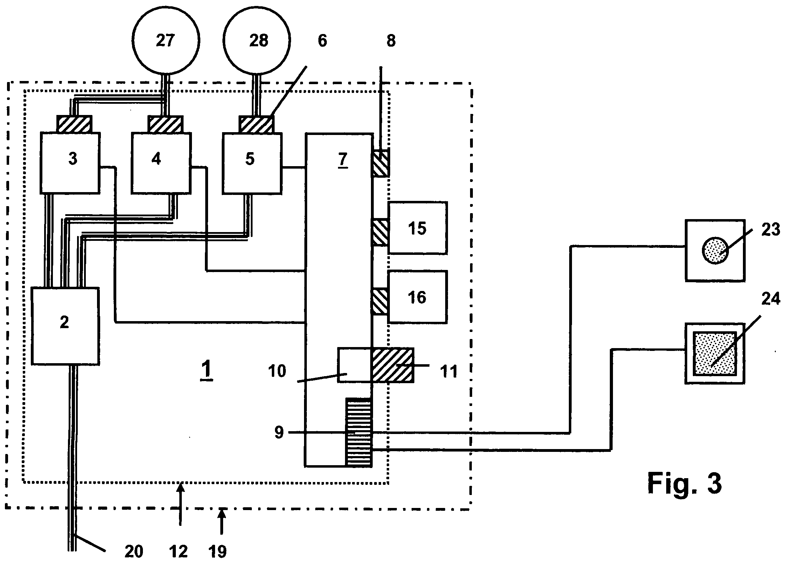

Beim Ausführungsbeispiel nach Fig. 3 sind zwei getrennt ansteuerbare Lasten 27, 28 am Mehrkanal-Einbaudimmer 1 angeschlossen, wobei Last 27 mit beiden (parallel geschalteten) Leistungsstufen 3, 4 verbunden ist. Das zentrale Bedienelement 15 dient zur Ansteuerung der Leistungsstufen 3 und 4 und damit der Last 27. Das zentrale Bedienelement 16 dient zur Ansteuerung der Leistungsstufe 5 und damit der Last 28. Das Vorort-Bedienelement 23 dient zur Ansteuerung der Leistungsstufen 3 und 4 und damit zur Ansteuerung der Last 27. Das Vorort-Bedienelement 24 dient zur Ansteuerung der Leistungsstufe 5 und damit zur Ansteuerung der Last 28. Lastseitig parallel geschaltete Leistungsstufen werden auch ansteuerungsseitig parallel geschaltet.

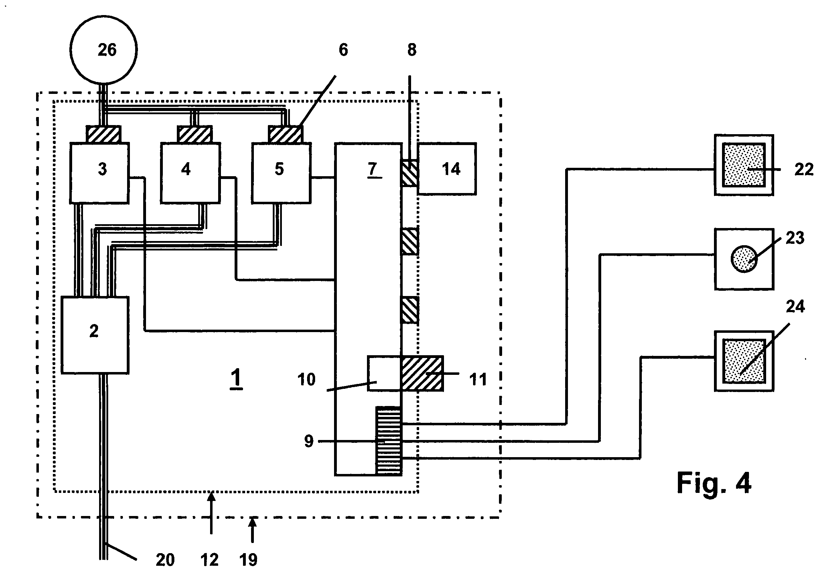

Beim Ausführungsbeispiel nach Fig. 4 ist eine einzige Last 26 an alle drei (parallel geschalteten) Leistungsstufen 3, 4, 5 des Mehrkanal-Einbaudimmers 1 angeschlossen. Es handelt sich hierbei um eine relativ leistungsstarke Last mit einer Leistung von z. B. 1000 W. Das zentrale Bedienelement 14 dient zur Ansteuerung der Last 27 und beaufschlagt demgemäß alle drei Leistungsstufen 3, 4, 5. Die Last 26 kann wahlweise von drei verschiedenen Vorort-Bedienelementen 22, 23, 24 dezentral angesteuert werden.

Für alle Ausführungsbeispiele gilt:
- Liegen der Verarbeitungs- und Steuereinrichtung 7 bezüglich einer Last unterschiedliche Ansteuersignale seitens der zentralen Bedienelemente 14 und/oder 15 und/oder 16 und der dezentralen Vorort-Bedienelemente 22 und/oder 23 und/oder 24 vor, so haben die Ansteuersignale der dezentralen Vorort-Bedienelemente 22 und/oder 23 und/oder 24 Vorrang vor den Ansteuersignalen der zentralen Bedienelemente 14 und/oder 15 und/oder 16.
- Die Verknüpfung zwischen einem zentralen Bedienelement 14 und/oder 15 und/oder 16 und einer zuzuordnenden Leistungsstufe 3 und/oder 4 und/oder 5 respektive der daran angeschlossenen Last wird durch entsprechende Betätigung des manuellen Eingabeelementes 11 der Eingabeeinheit 10 konkret für den speziellen Anwendungsfall vorgegeben. Das gleiche gilt für die Verknüpfung zwischen einem Vorort-Bedienelement 22 und/oder 23 und/oder 24 und einer zuzuordnenden Leistungsstufe 3 und/oder 4 und/oder 5 respektive der daran angeschlossenen Last.

Wird der Mehrkanal-Einbaudimmer 1 z. B. nur mit einem einzigen zentralen Bedienelement 14 oder 15 oder 16 bestückt, steuert dieses zentrale Bedienelement alle Leistungsstufen bzw. Ausgänge des Dimmers synchron. Die Verarbeitungs- und Steuereinrichtung 7 enthält eine entsprechende Logik. Bei Verwendung des Mehrkanal-Einbaudimmers 1 zur getrennten Steuerung von mehreren Ausgängen können mehrere zentrale Bedienelemente benutzt werden, maximal ein zentrales Bedienelement je Ausgang. Im Normalfall ist jeder Steckplatz (Bedienelement-Schnittstelle 8) des Mehrkanal-Einbaudimmers zum Einstecken eines zentralen Bedienelementes einer bestimmten Leistungsstufe zugeordnet (Grundeinstellung). Bei Verwendung von weniger zentralen Bedienelementen als Ausgängen bzw. Leistungsstufen können die Ausgänge ohne zentrale Bedienelemente nach einer vorgegebenen Logik der Verarbeitungs- und Steuereinrichtung 7 bzw. nach einer entsprechenden Vorgabe in der Eingabeeinheit 10 von einem zentralen Bedienelement mit gesteuert verwenden - siehe Ausführungsbeispiel gemäß Fig. 2. Bei Verwendung von Timer-Bedienelementen als zentrale Bedienelemente kann eine Zeitsteuerung der einzelnen Kanäle in gewünschter individueller und programmierbarer Weise erfolgen. Die zeitunabhängige manuelle Steuerung über Nebenstellenbetrieb mittels mindestens eines Vorort-Bedienelements ist optional und jederzeit möglich.

Bei den vorstehend beschriebenen Ausführungsbeispielen wird ein Mehrkanal-Einbaudimmer mit drei Kanälen beschrieben. Die Ausführungen gelten sinngemäß selbstverständlich auch für Mehrkanal-Einbaudimmer mit vier oder mehr Kanälen.

### Bezugszeichenliste:

- 1: Mehrkanal-Einbaudimmer
- 2: Eingangsstufe
- 3: erste Leistungsstufe
- 4: zweite Leistungsstufe
- 5: dritte Leistungsstufe
- 6: Last-Anschlusseinheit
- 7: Verarbeitungs- und Steuereinrichtung
- 8: Bedienelement-Schnittstelle
- 9: Bedienelement-Anschlusseinheit
- 10: Eingabeeinheit
- 11: manuelles Eingabeelement (z. B. Tasten)
- 12: Gerätegehäuse
- 13: ---
- 14: erstes zentrales Bedienelement
- 15: zweites zentrales Bedienelement
- 16: drittes zentrales Bedienelement
- 17: ---
- 18: ---
- 19: Verteilerschrank
- 20: Versorgungsnetz
- 21: ---
- 22: erstes Vorort-Bedienelement
- 23: zweites Vorort-Bedienelement
- 24: drittes Vorort-Bedienelement
- 25: ---
- 26: erste Last
- 27: zweite Last
- 28: dritte Last

## Patentansprüche

1. Mehrkanal-Einbaudimmer (1) mit einer an ein Versorgungsnetz (20) anschließbaren Eingangsstufe (2), wenigstens drei unabhängig voneinander ansteuerbaren Leistungsstufen (3, 4, 5) mit separaten Last-Anschlusseinheiten (6) für den Anschluss einer Last oder mehrerer Lasten (26, 27, 28) und mit einer Verarbeitungs- und Steuereinrichtung (7) in einem gemeinsamen Gerätegehäuse (12), wobei die Verarbeitungs- und Steuereinrichtung (7) für jede ansteuerbare Leistungsstufe (3, 4, 5) mindestens eine individuelle Bedienelement-Schnittstelle (8) zur Bestückung mit einem eigenen zentralen Bedienelement (14, 15, 16) aufweist, **dadurch gekennzeichnet,**
- **dass** die Verarbeitungs- und Steuereinrichtung (7) eine Eingabeeinheit (10) mit manuellem Eingabeelement (11) für eine individuelle Zuordnung einer Leistungsstufe (3, 4, 5) zu einem zentralen Bedienelement (14, 15, 16) respektive dessen Bedienelement-Schnittstelle (8) aufweist,
- **dass** jede Leistungsstufe (3, 4, 5) respektive der daran angeschlossenen Last (26, 27, 28) jedem Bedienelement (14, 15, 16) zuordenbar ist, wobei die Bedienelemente (14, 15, 16) wahlweise als Dreh-Bedienelement, als Tast-Bedienelement oder als Timer- Bedienelement ausgebildet sind, und
- **dass** der Mehrkanal-Einbaudimmer durch die Verwendung von wenigstens einem Timer- Bedienelement eine Zeitsteuerung ermöglicht.

2. Mehrkanal-Einbaudimmer nach Anspruch 1, **dadurch gekennzeichnet, dass** die Verarbeitungs- und Steuereinrichtung (7) eine Bedienelement-Anschlusseinheit (9) für den Anschluss von wenigstens zwei dezentralen Vorort-Bedienelementen (22, 23, 24) aufweist, welche als manuell betätigbare Dreh-Bedienelemente oder Tast-Bedienelemente ausgebildet und in unterschiedlichen Räumen eines Gebäudes installiert sind.

3. Mehrkanal-Einbaudimmer nach Anspruch 1, **dadurch gekennzeichnet, dass** mehrerer Timer- Bedienelemente für eine Mehrkanaldimmer-Zeitschaltuhr mit getrennter Zeitsteuerung der einzelnen Kanäle (3, 4, 5) des Mehrkanal- Einbaudimmers vorgesehen sind.

## Claims

1. Multichannel built-in dimmer (1) having an input stage (2), which can be connected to a supply grid (20), at least three power stages (3, 4, 5), which can be actuated independently of one another and have separate load connection units (6) for the connection of a load or a plurality of loads (26, 27, 28), and having a processing and control device (7) in a joint device housing (12), wherein the processing and control device (7) has for each actuable power stage (3, 4, 5) at least one individual operator control element interface (8) for populating with a separate central operator control element (14, 15, 16), **characterized in that**
- the processing and control device (7) has an input unit (10) having a manual input element (11) for individually assigning a power stage (3, 4, 5) to a central operator control element (14, 15, 16) or the operator control element interface (8) thereof respectively,
- each power stage (3, 4, 5) or the load (26, 27, 28) connected thereto respectively can be assigned to each operator control element (14, 15, 16), wherein the operator control elements (14, 15, 16) are selectively formed as a rotary operator control element, as a button operator control element or as a timer operator control element, and
- the multichannel built-in dimmer makes time control possible through the use of at least one timer operator control element.

2. Multichannel built-in dimmer according to Claim 1, **characterized in that** the processing and control device (7) has an operator control element connection unit (9) for the connection of at least two decentralized on-site operator control elements (22, 23, 24), which are formed as manually operable rotary operator control elements or button operator control elements and are installed in different rooms of a building.

3. Multichannel built-in dimmer according to Claim 1, **characterized in that** a plurality of timer operator control elements are provided for a multichannel dimmer timer switch with separate time control of the individual channels (3, 4, 5) of the multichannel built-in dimmer.

## Revendications

1. Variateur intégré multicanal (1) comprenant un étage d'entrée (2) pouvant être raccordé à un réseau d'alimentation (20), au moins trois étages de puissance (3, 4, 5) pouvant être commandés indépendamment les uns des autres et comprenant des unités de raccordement de charge (6) séparées pour le raccordement d'une ou de plusieurs charges (26, 27, 28) et comprenant un dispositif de traitement et de commande (7) dans un boîtier d'appareil (12) commun, dans lequel le dispositif de traitement et de commande (7) comporte, pour chaque étage de puissance (3, 4, 5) pouvant être commandé, au moins une interface (8) individuelle d'élément de commande destinée à être équipée d'un élément de commande (14, 15, 16) central qui lui est propre, **caractérisé**
- **en ce que** le dispositif de traitement et de commande (7) comporte une unité d'entrée (10) comprenant un élément d'entrée manuelle (11) permettant une affectation individuelle d'un étage de puissance (3, 4, 5) à un élément de commande (14, 15, 16) central ou à son interface d'élément de commande (8),
- **en ce que** chaque étage de puissance (3, 4, 5) ou la charge (26, 27, 28) qui lui est raccordée peut être affectée à chaque élément de commande (14, 15, 16), dans lequel les éléments de commande (14, 15, 16) sont réalisés au choix sous forme d'élément de commande rotatif, d'élément de commande à bouton-poussoir ou d'élément de commande à temporisation, et
- **en ce que** le variateur intégré multicanal permet une commande temporelle par utilisation d'au moins un élément de commande à temporisation.

2. Variateur intégré multicanal selon la revendication 1, **caractérisé en ce que** le dispositif de traitement et de commande (7) comprend une unité de raccordement d'élément de commande (9) pour le raccordement d'au moins deux éléments de commande locaux décentralisés (22, 23, 24), qui sont réalisés sous forme d'éléments de commande rotatifs ou d'éléments de commande à bouton-poussoir pouvant être actionnés manuellement et qui sont installés dans différentes pièces d'un bâtiment.

3. Variateur intégré multicanal selon la revendication 1, **caractérisé en ce que** plusieurs éléments de commande à temporisation sont prévus pour une minuterie de variateur multicanal avec une commande temporelle distincte des différents canaux (3, 4, 5) du variateur intégré multicanal.
